# EUROPEAN PATENT APPLICATION

(11) **EP 1 936 007 A2**
(43) Date of publication of application: **25.06.2008**
(21) Application number: 07122210.3
(22) Date of filing: 04.12.2007
(51) Int. Cl.: C23C 24/08, C23C 24/10, F01D 5/28

(54) **Microwave process for forming a coating**

(30) Priority: 12.12.2006 US 609473
(71) Applicant: General Electric Company, Schenectady, NY 12345 (US)
(72) Inventor: Borneman, Karl Lee, Dayton, OH 45459 (US); Saylor, Matthew David, Blanchester, OH 45107 (US)
(74) Representative: Szary, Anne Catherine

(57) **Abstract**

A process for forming a coating on a surface of a substrate (14), in which the heating source for the coating process is microwave radiation (18) so that heating of the coating material is selective and sufficient to melt and bond the coating material to the substrate (14) without excessively heating the substrate (14). The process entails forming a coating material (10) containing powder particles (12) that are sufficiently small to be highly susceptible to microwave radiation (18). The coating material (10) is applied to a surface of the substrate (14) and subjected to microwave radiation (18) so that the powder particles (12) within the coating material (10) couple with the microwave radiation (18) and sufficiently melt to form a coating (28) on the substrate (14) surface. The microwave radiation (18) is then interrupted to allow the coating (28) to cool, solidify, and mechanically bond to the substrate (14).

## Description

This invention generally relates to coating methods, including processes and materials for use in the manufacturing, repair, and build-up of components. More particularly, this invention relates to a method of forming a coating by applying a coating material to a substrate and then subjecting the coating material to microwave energy to melt and bond the coating material to the substrate with minimal affect on the substrate and its properties.

Components that operate in a gas turbine environment often require coatings resistant to environmental, thermal, and/or mechanical damage to extend their lives during operation. Coatings are also applied to gas turbine components to repair, dimensionally restore, or build up a component surface. Various coating processes have been developed to deposit coating materials capable of surviving and remaining adherent in the chemically and thermally hostile environment of a gas turbine. Examples include thermal spray, braze, and vapor phase processes. Thermal spray processes include, for example, combustion flame spray, plasma arc spray, wire arc spray, detonation gun, and high velocity oxygen fuel (HVOF). These processes generally involve propelling a powder or wire feedstock onto a roughened substrate surface while heating the feed stock with a plasma arc, DC arc, or combustion gases. The feed stock may reach temperatures in excess of 3000°C, during which the feed stock at least partially melts before impacting the surface, and thereafter cools and mechanically bonds to the roughened surface to form an adherent coating. During the coating process, the substrate is subjected to heating from the heat source, as well as heating by thermal conduction from the coating. Braze techniques employed to form coatings include the use of pastes, tapes, sintered preforms, etc., containing or formed from metal alloy powders. In each case, the braze material is applied to a surface to be coated and then heated to a temperature sufficient to melt the alloy, but below the melting point of the substrate being brazed. On cooling, the alloy solidifies to form a mechanical bond with the substrate.

Metal alloys used in brazing processes and typically used in thermal spray processes melt at lower temperatures than the substrates being repaired as a result of containing one or more melting point depressants, such as boron and/or silicon. Otherwise, the alloys typically have compositions similar to the base metal of the substrate being coated, such that the temperature of the substrate may closely approach its melting temperature during the coating deposition process. As such, there is a risk that the substrate may be heated to a temperature that can adversely affect its mechanical properties, such as hardness and fatigue life, as a result of grain growth, incipient melting, recrystallization, or unfavorable phase formation. If the coating material contains boron and/or silicon as melting point depressants, the mechanical and environmental properties of the coating can be reduced as a result of the minimal ductility of the borides and silicides they form by reaction with refractory elements. Boron and silicon can also diffuse into the substrate to adversely affect its mechanical and environmental properties. Thermal spray processes also have the disadvantage of being high-overhead processes that require significant amounts of time, setup, and expense.

### BRIEF SUMMARY OF THE INVENTION

The present invention generally provides a process for forming a coating on a surface of a substrate, in which the heating source for the coating process is microwave radiation so that heating of the coating material is selective and sufficient to cause complete melting of the coating material and permit mechanical bonding to the substrate on which the coating is being applied, but without excessively heating the substrate so as not to significantly degrade the properties of the substrate.

The process generally entails forming a coating material containing powder particles that are sufficiently small to be highly susceptible to microwave radiation. The coating material is then applied to a surface of a substrate and subjected to microwave radiation so that the powder particles within the coating material couple with the microwave radiation and sufficiently melt to form a coating on the surface of the substrate. The microwave radiation is then interrupted to allow the coating to cool, solidify, and mechanically bond to the substrate.

According to the invention, the powder particles are sufficiently small to be significantly more susceptible to absorbing microwave energy than the substrate being coated, which predominantly reflects the microwaves. As a result, at least partial melting of the particles can be achieved to form a coating that mechanically bonds to the surface of the substrate, with little or no surface melting of the substrate. Such a result may be obtained even if the powder particles have the same or even higher melting temperature than the substrate. Finally, at least partial melting of the particles can be achieved even if their composition is free of melting point depressants, such as boron and silicon, beyond any amounts of these elements present in the substrate.

From the above, it can be appreciated that the process of this invention can be applied to coating processes employed to repair or build up a substrate surface, form a dimensional restorative coating, or form an environmentally, thermally, and/or mechanically-resistant coating that serves to protect the substrate. Because heating is by microwave radiation, the heating rate and melting of the powder particles are influenced by coupling of microwave radiation instead of location relative to a heating source. This aspect of the invention enables the powder particles to melt prior to heating of the substrate surface contacted by the coating material. As a result, minimal intermixing and interdiffusion occurs between the coating and substrate materials that might degrade their often very different environmental and mechanical properties.

Other objects and advantages of this invention will be better appreciated from the following detailed description.

### BRIEF DESCRIPTION OF THE DRAWINGS

Figure 1 schematically represents a coating material applied to the surface of a substrate and containing powder particles that are susceptible to microwave heating in accordance with an embodiment of the present invention.
Figure 2 is a cross-sectional view of a portion of a compressor blade installed in a compressor spool, with contacting surfaces of the blade and spool protected by a low-friction coating that can be formed by the process of this invention.
Figures 3 through 8 are scanned images of cross-sections through low-friction coatings formed by the process of this invention.

### DETAILED DESCRIPTION OF THE INVENTION

The invention will be described with specific reference to processing of components for a gas turbine engine, and particularly the coating of such components. However, the invention has application to a variety of components and materials other than those discussed, and such variations are within the scope of this invention.

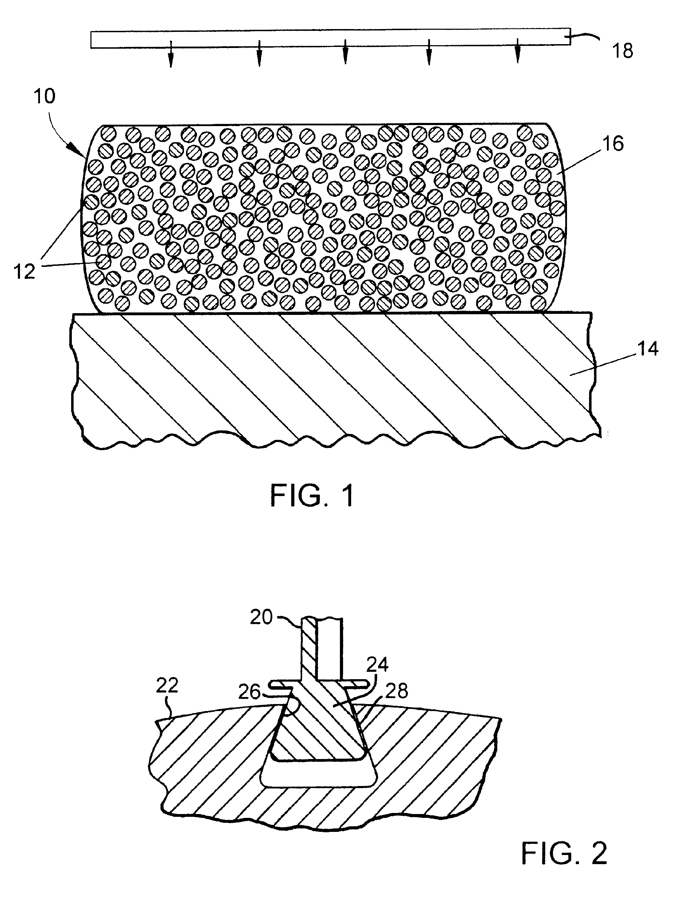

Figure 1 schematically represents a preformed sheet material 10 containing powder particles 12 applied to and contacting a surface of a substrate 14. The preformed sheet material 10 is shown in the form of a tape, in which case the particles 12 are contained within a binder 16 that, according to known practices such as braze tapes used in brazing techniques, bums off at temperatures below that required to melt the particles 12. Alternatively, the sheet material 10 may be in the form of a binder-free presintered shape held together as a result of the particles 12 being fused (agglomerated) together. Another option is to use loose powder particles 12, in which case the binder 16 is again omitted. The substrate 14 represents a surface region of a component to be protected, repaired, and/or built-up by a coating formed from the sheet material 10. The substrate 14 can be formed of various materials, notable examples of which include nickel, cobalt, and iron-base superalloys and titanium alloys commonly used for gas turbine engine components.

According to the invention, the particles 12 of the sheet material 10 are melted to form a coating as a result of being subjected to microwave radiation 18, as discussed in more detail below. The powder particles 12 can be formed of a variety of materials, limited only by the requirement that the particles 12 have a composition that is capable of being heated by microwave radiation 18, will form the desired coating with its desired properties, and is compatible with the material of the substrate 14 at temperatures sustained during the coating process and in the operating environment of the substrate 14. Materials capable of being heated when subjected to microwave radiation include nonconductors and conductors under appropriate conditions. Because microwave radiation has varying electric and magnetic fields, direct electric heating can be significant in certain nonmetallic materials. However, for compatibility with the metallic substrate 14, the particles 12 employed by this invention are preferably metallic and therefore primarily heated through electromagnetic effects. Compatibility is assured if the particles 12 have the very same composition as that of the substrate 14, though suitable compatibility can also be achieved if the particles 12 and substrate 14 do not have compositions prone to detrimental interdiffusion at elevated temperatures that would lead to loss of desired mechanical or environmental properties. The particles 12 may be a conventional coating alloy that may or may not contain one or more melting point depressants, such as boron or silicon. Furthermore, the particles 12 can be formed of a superalloy such as of the type used in turbine applications, or an alloy whose base composition is similar to that of the substrate 14 but modified to contain alloying constituents different from or at different levels than the substrate 14. Though all of the particles 12 are not required to have the same composition, the present invention permits such uniformity.

According to a preferred aspect of the invention, at least some and preferably all of the powder particles 12 must be sufficiently small to be highly susceptible to microwave radiation 18, thereby preferentially coupling with the microwave radiation 18 (as compared to the substrate 14) to significantly enhance selective heating and melting of the particles 12 by the microwave radiation 18. Coupling with the microwave radiation 18 is generally the result of the metallic particles 12 being sufficiently conductive to generate eddy currents induced by the magnetic field of the microwave radiation 18. It is known that the magnetic loss component of susceptibility for a material in very fine powder size is dependent on factors such as microwave power and frequency. Conversely, for a given microwave power and frequency, the interaction between microwave and individual metals or alloys will be optimum at a distinct particle size, usually on the order of a few tens of micrometers for conventional microwave conditions (about 2.45 GHz and about 1 to about 10 kW power). Particle sizes above and below the optimal size for a specific material will not couple as well with the microwave radiation. Consequently, suitable and preferred maximum sizes for the particles 12 will depend on the particular application, temperatures, and materials involved. Generally speaking, it is believed that a maximum particle size is on the order of about 150 micrometers, though smaller and larger particle sizes are also possible.

In contrast to the particles 12, bulk metals such as the substrate 14 tend to reflect microwave radiation. As noted above, this aspect of the present invention makes possible the coating of a substrate 14 with alloys having the very same composition as the substrate 14, as well as materials with the same or even higher melting point as the substrate 14. For example, a nickel-base superalloy component can be coated with a material having the same nickel-base superalloy composition or another nickel-base alloy, in other words, an alloy whose base metal is the same as the base metal of the substrate 14. In this manner, degradation of the properties of the substrate 14 resulting from interdiffusion with the coating material can be essentially if not entirely avoided. In view of the capability of melting particles 12 formed of a material having a melting point above that of the substrate 14, it should be appreciated that the coating process of this invention is not limited to the conventional use of coating materials with melting temperatures below that of the substrate being coated.

A wide range of microwave frequencies could be used with the present invention, though regulations generally encourage or limit implementation of the invention to typically available frequencies, e.g., 2.45 GHz and 915 MHz, with the former believed to be preferred. However, it should be understood that other frequencies are technically capable of use.

Figure 2 shows a section of a gas turbine engine compressor blade and spool assembly that represents a particular application for the process of this invention. A compressor blade 20 is shown assembled to a compressor spool 22, with the dovetail 24 of the blade 20 received in a dovetail slot 26 of the spool 22, as well known in the art. Common materials for the blade 20 and spool 22 include titanium and its alloys, a particular example of which is Ti-6A1-4V. The dovetail 24 and dovetail slot 26 have mutual sloping side walls that are in rubbing contact during engine operation to the extent that fretting fatigue damage can occur. For this reason, the contact surfaces of the dovetail 24 and/or slot 26 are typically protected with a coating 28 of a friction-reducing alloy. For use with titanium alloys, notable friction-reducing alloys include copper alloys and particularly CuNiIn alloys having compositions of, by weight, about 56.3% to about 59.8% copper, about 35.5% to about 37.5% nickel, about 4.7% to about 5.2% indium, and up to about 1% impurities. The melting temperature of a CuNiIn alloy with a nominal composition within the stated ranges is about 1150°C. Coatings of this type have previously been applied by plasma spraying, which can result in significant heating of the substrate region of the dovetail 24 or slot 26 directly beneath the coating 28. However, during a coating operation, Ti-6Al-4V alloys are preferably kept below their beta-phase transformation temperature, which is typically within a range of about 900°C to about 1040°C. Furthermore, Ti-6Al-4V can form brittle intermetallics with other metals, including copper and nickel. With the present invention, such potential detrimental effects of excessively heating a substrate 14 formed of Ti-6Al-4V when depositing a CuNiIn coating 28 can be avoided by using the coating process as described above and represented in Figure 1.

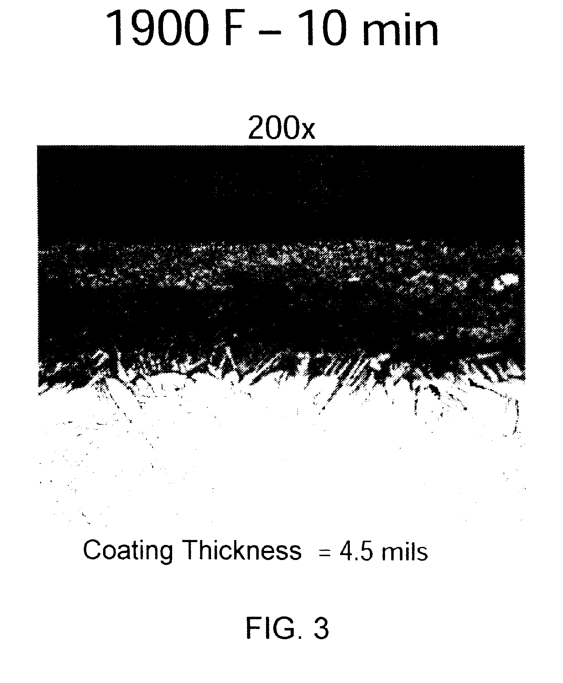

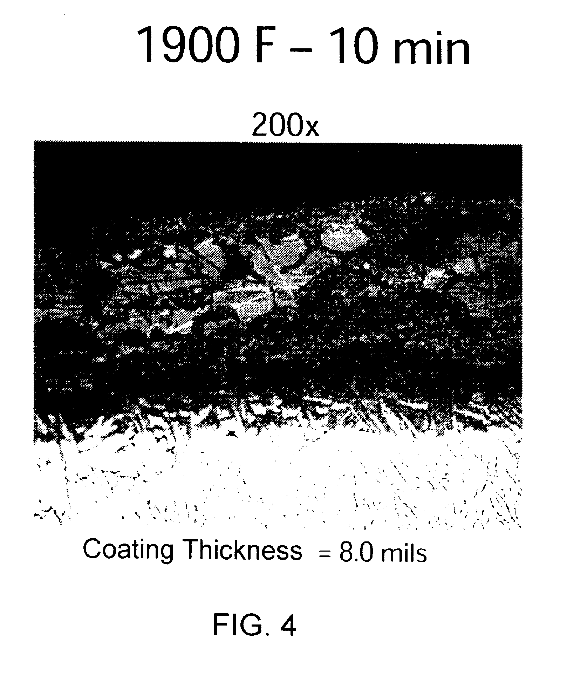

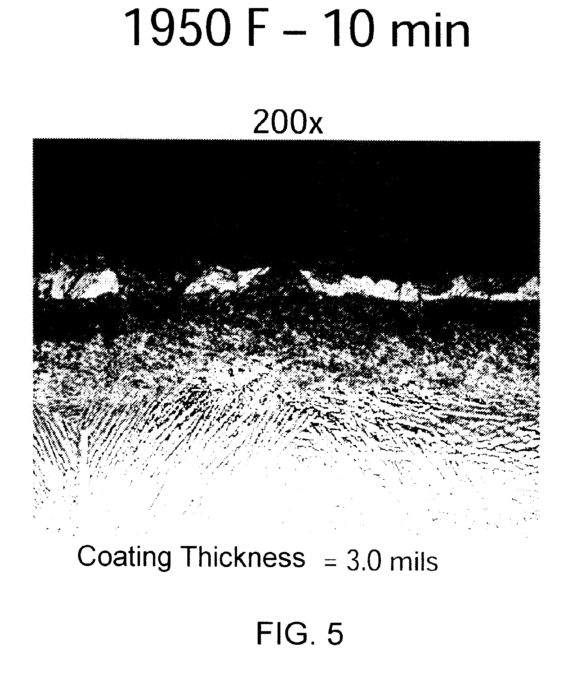

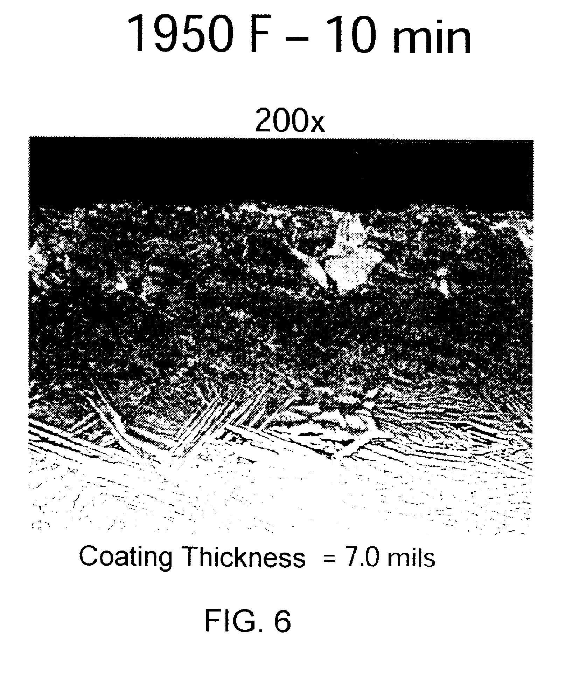

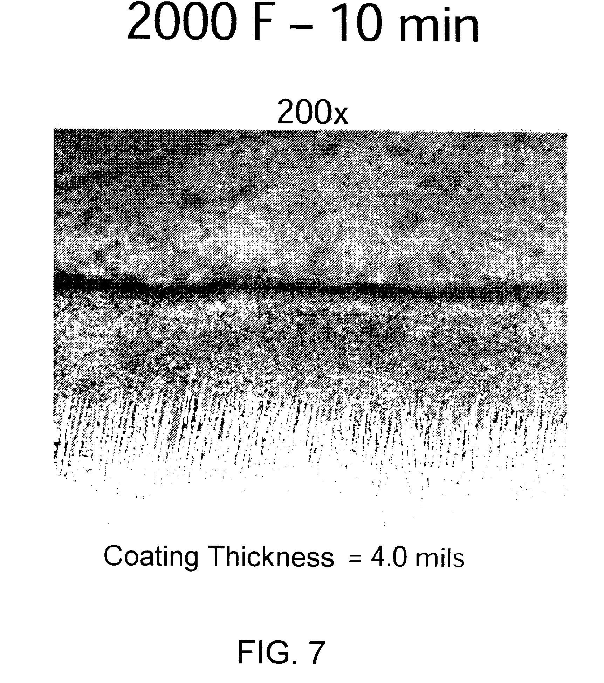

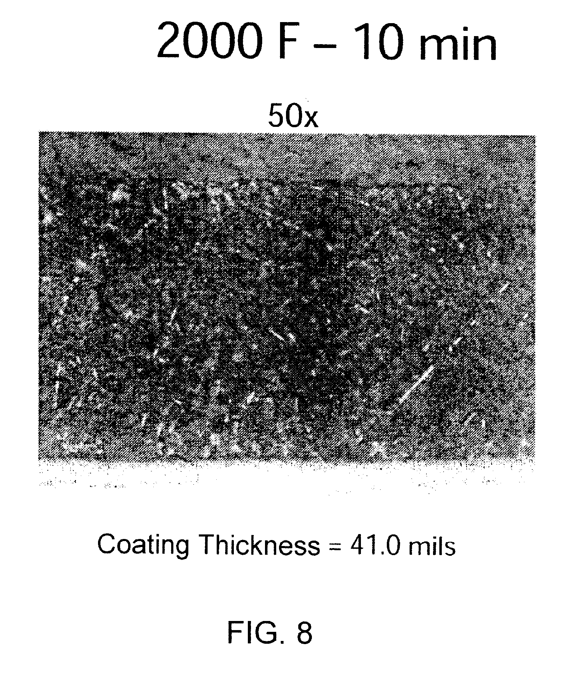

In a series of experiments leading up to this invention, CuNiIn coatings were formed on Ti-6Al-4V substrates using a loose powder whose particles had a nominal composition of, by weight, about 58% copper, about 37% nickel, and about 5% indium. The particles had a particle size of about 200/325 mesh (about 45 to about 75 micrometers). Prior to applying the powder, the surfaces of the Ti-6A1-4V substrates were roughened by grit blasting with 60 mesh aluminum oxide to obtain a surface roughness of approximately 120 microinch Ra. The roughened surfaces were then oriented horizontally, and the powders applied and subjected to microwave radiation to achieve and maintain maximum temperatures of about 1900°F, 1950°F, and 2000°F (about 1040°C, 1065°C, and 1090°C, respectively) for about ten minutes. Figures 3 through 8 are scanned images of cross-sections of the resulting coated specimens and show that the CuNiIn particles melted to form coatings mechanically bonded to the roughened substrate surfaces, with minimal melting of the substrate surfaces.

While the invention has been described in terms of particular embodiments, it is apparent that other forms could be adopted by one skilled in the art. Accordingly, the scope of the invention is to be limited only by the following claims.

## Claims

1. A process for forming a coating (28) on a surface of a substrate (14,24), the process comprising:
forming a coating material (10) comprising powder particles (12) that are sufficiently small to be highly susceptible to microwave radiation (18);
applying the coating material (10) to the surface of the substrate (14,24);
subjecting the coating material (10) to microwave radiation (18) so that the powder particles (12) within the coating material (10) couple with the microwave radiation (18) and sufficiently melt to form the coating (28) on the surface of the substrate (14,24); and then
interrupting the microwave radiation (18) and allowing the coating (28) to cool, solidify, and mechanically bond to the substrate (14,24).

2. The process according to claim 1, **characterized in that** the coating material (10) is a loose powder material (10) consisting essentially of the powder particles (12).

3. The process according to claim 1, **characterized in that** the coating material (10) is a preformed sheet material (10) containing the powder particles (12) and a binder.

4. The process according to claim 1, **characterized in that** the coating material (10) is a preformed sintered body in which the powder particles (12) are sintered together.

5. The process according to any one of the preceding claims, **characterized in that** the powder particles (12) are formed of a metallic material.

6. The process according to any one of the preceding claims, **characterized in that** the powder particles (12) are formed of a CuNiIn alloy and the substrate (14,24) is formed of a titanium alloy.

7. The process according to claim 6, **characterized in that** the titanium alloy is a Ti-6A1-4V alloy.

8. The process according to any one of the preceding claims, **characterized in that** the powder particles (12) have a maximum particle size of about 150 micrometers.

9. The process according to any one of the preceding claims, **characterized in that** the substrate (14,24) is a portion of a gas turbine engine component (20,22).

10. The process according to claim 9, **characterized in that** the component (20,22) is chosen from the group consisting of compressor blades (20) and compressor spools (22), the process further comprising the step of installing the component (20,22) so that the coating (28) is subject to rubbing contact during engine operation.
